# EUROPÄISCHE PATENTANMELDUNG

(11) **EP 4 183 617 A1**
(43) Veröffentlichungstag der Anmeldung: **24.05.2023**
(21) Anmeldenummer: 22208806.4
(22) Anmeldetag: 22.11.2022
(51) Int. Cl.: B60L 53/16, B60L 53/65, H04W 4/40

(54) **IDENTIFIKATIONSMODUL, ELEKTROFAHRZEUG UND LADEEINRICHTUNG**

(30) Priorität: 22.11.2021 DE 102021130476
(71) Anmelder: BURY Sp. z o.o., 39-300 Mielec (PL)
(72) Erfinder: Makuch, Damian, 33-230 Szczucin (PL)
(74) Vertreter: Günther, Constantin

(57) **Zusammenfassung**

Die Erfindung betrifft ein Identifikationsmodul zur drahtlosen elektronischen Identifikation eines Elektrofahrzeugs. Die Erfindung betrifft außerdem ein Elektrofahrzeug mit einem solchen Identifikationsmodul, eine Ladeeinrichtung zum Aufladen der Antriebsbatterie eines Elektrofahrzeugs sowie ein Set aus einer Ladeeinrichtung und einem Identifikationsmodul. Die Erfindung betrifft außerdem ein Verfahren zur Anbringung eines solchen Identifikationsmoduls an einem Elektrofahrzeug.

## Beschreibung

Die Erfindung betrifft ein Identifikationsmodul zur drahtlosen elektronischen Identifikation eines Elektrofahrzeugs. Die Erfindung betrifft außerdem ein Elektrofahrzeug mit einem solchen Identifikationsmodul, eine Ladeeinrichtung zum Aufladen der Antriebsbatterie eines Elektrofahrzeugs sowie ein Set aus einer Ladeeinrichtung und einem Identifikationsmodul. Die Erfindung betrifft außerdem ein Verfahren zur Anbringung eines solchen Identifikationsmoduls an einem Elektrofahrzeug. Dabei hat die Erfindung das Ziel, eine eindeutige Identifizierung eines Elektrofahrzeugs vor oder während eines Ladevorgangs zu ermöglichen, z. B. um die Ladeparameter wie z. B. die eingeladene Energiemenge eindeutig dem Elektrofahrzeug zuordnen zu können.

Derzeit gibt es verschiedene Möglichkeiten, die von einer öffentlichen oder privaten Ladestation in ein Elektrofahrzeug übertragene Energie abzurechnen, bzw. zu steuerlichen Zwecken zu dokumentieren. Es gibt die Möglichkeit der Kreditkartenzahlung, indem der Fahrer des Elektrofahrzeugs durch Nutzung einer Kreditkarte die Bezahlung der dann nachfolgend bis zum Ende des Ladevorgangs geladenen Energie autorisiert. Ähnlich ist es bei der Nutzung von Karten, die von bestimmten Energieverbünden herausgegeben werden. Der Kunde erhält bei diesen Zahlungsarten eine Rechnung, aus der hervorgeht, wann wieviel Energie zu welchem Preis geladen wurde, und wer diese Ladevorgänge bezahlt hat. Die Identität des Elektrofahrzeugs geht aus der Rechnung nur hervor, wenn für den Ladevorgang eine explizit dem Elektrofahrzeug zugeordnete Ladetankkarte benutzt wurde oder wenn die Identität, z. B. das Kennzeichen, beim Ladevorgang an der Ladesäule manuell eingegeben wurde. In beiden Fällen ist Raum für Manipulationen gegeben, da eine einem Elektrofahrzeug zugeordnete Abrechnungskarte auch in einem anderen Fahrzeug benutzt werden kann, oder indem der Fahrer beim Ladevorgang wissentlich ein anderes Kennzeichen eingibt.

Eine Möglichkeit, die Identität des Elektrofahrzeugs beim Ladevorgang festzustellen, ist das Auslesen der Identität über die Kommunikation mit dem Elektrofahrzeug vor und/oder während des Ladevorgangs. Diese Verfahren haben sich unter den Bezeichnungen Autocharge und Plug and Charge etabliert. Beide nutzen PLC (Power Line Communication) über eine der vorhandenen Verbindungsleitungen zum Elektrofahrzeug. Die Daten werden dabei auf ein Hochfrequenz-Trägersignal moduliert und die Information somit übertragen. Um Sender und Empfänger während der Kommunikation zu unterscheiden, besitzt jeder Teilnehmer eine eindeutige MAC-Adresse (Media Access Control). Eines der zuvor genannten Verfahren benutzt diese Adresse des Elektrofahrzeugs, um die Identität festzustellen. Bei dem anderen Verfahren liest die Ladestation ein im Elektrofahrzeug hinterlegtes Zertifikat aus und prüft es über eine Online-Verbindung auf Gültigkeit, was eine entsprechend aufwendige Sicherheitsinfrastruktur notwendig macht. Nachteil dieser Verfahren ist, dass viele Elektrofahrzeuge die PLC-Kommunikation und den Datenaustausch nach ISO 15118 noch nicht unterstützen, und somit diese Möglichkeit nicht zur Verfügung steht. Ein weiterer Nachteil bei dem Verfahren der Identifikation über die MAC-Adresse ist, dass sie durch Manipulation verändert werden kann und somit eine andere Identität des zu ladenden Elektrofahrzeugs vorgetäuscht wird.

Der Erfindung liegt die Aufgabe zugrunde, verbesserte Möglichkeiten zur eindeutigen Identifizierung eines Elektrofahrzeugs vor oder während eines Ladevorgangs zu ermöglichen.

Diese Aufgabe wird gelöst durch ein Identifikationsmodul zur drahtlosen elektronischen Identifikation eines Elektrofahrzeugs, aufweisend eine Antenne mit einer oder mehreren spulenartig angeordneten Leiterschleifen und ein mit der Antenne verbundenes elektronisches Bauelement, in dem ein eindeutiger Identifikationscode gespeichert ist, wobei das Identifikationsmodul dazu eingerichtet ist, im Falle einer durch Funksignale drahtlos durchgeführten Abfrage des Identifikationscodes diesen über die Antenne zu übertragen, wobei das Identifikationsmodul zur Anbringung an einem Ladeanschluss zum Aufladen der Antriebsbatterie des Elektrofahrzeugs eingerichtet ist. Die Erfindung hat den Vorteil, dass sie unabhängig von Art und Typ des Elektrofahrzeugs, insbesondere herstellerunabhängig, eingesetzt werden kann. Das Identifikationsmodul kann grundsätzlich an jedem Elektrofahrzeug angebracht werden, auch nachträglich, d. h. im Sinne einer Nachrüstung. Auf diese Weise kann auch eine vorhandene Elektrofahrzeug-Flotte, z. B. bei einer Autovermietung oder bei Firmenfahrzeugen, für verbesserte Abrechnungsmöglichkeiten mit solchen Identifikationsmodulen ausgerüstet werden.

Der Identifikationscode kann durch das Identifikationsmodul im Falle der Abfrage in beliebiger Weise über die Antenne bereitgestellt werden, zum Beispiel passiv, indem die empfangenen Wellen der Funksignale der Abfrageeinheit frequenzselektiv belastet werden. Alternativ ist auch ein aktives Aussenden des Identifikationscodes möglich.

Solche Identifikationsmodule können zudem sehr kleinbauend und kostengünstig bereitgestellt werden, sodass sie an jedem üblichen Elektrofahrzeug angebracht werden können. Beispielsweise kann das Identifikationsmodul als RFID-Modul (RFID - Remote Frequency Identification) oder als NFC-Modul (NFC - Near Field Communication) ausgebildet sein, insbesondere als RFID-Transponder oder NFC-Transponder. Auf diese Weise können vorhandene Kurzstrecken-Funkstandards für die Realisierung des Identifikationsmoduls und der Abfrage des Identifikationscodes genutzt werden.

Durch die Antenne mit einer oder mehreren Leiterschleifen kann eine gute Datenübertragung bei der Abfrage des Identifikationscodes gewährleistet werden. Vorteilhafter Weise kann in das Gegenstück zum Ladeanschluss, d. h. in oder an einem Anschlussverbinder (z. B. Ladestecker) einer Ladeeinrichtung eine elektronische Abfrageeinheit baulich integriert sein, die zum Abfragen des Identifikationscodes des Identifikationsmoduls ausgebildet ist. Auf diese Weise kann bei in den Ladeanschluss des Elektrofahrzeugs eingestecktem Anschlussverbinder durch dessen elektronische Abfrageeinheit mittels Funkübertragung der Identifikationscode vom Identifikationsmodul zuverlässig abgefragt werden.

Gemäß einer vorteilhaften Ausgestaltung der Erfindung ist vorgesehen, dass das Identifikationsmodul eine äußere Formgebung hat, die wenigstens teilweise an die Form einer nutförmigen Aussparung des Ladeanschlusses, die wenigstens einige Steckkontakte des Ladeanschlusses umfangsseitig umgibt, angepasst ist, so dass das Identifikationsmodul in diese Aussparung einsetzbar ist. Auf diese Weise kann das Identifikationsmodul gut geschützt und im Wesentlichen unsichtbar am Elektrofahrzeug angebracht werden. Hierdurch ist zudem eine gute Datenübertragung zur Abfrageeinheit des Anschlussverbinders gewährleistet. Zudem kann eine hohe Manipulationssicherheit geschaffen werden, da ein unbefugtes Austauschen des Identifikationsmoduls durch die bauliche Anordnung in der Aussparung erschwert ist.

Übliche Anschlussverbinder von Ladeeinrichtungen für Elektrofahrzeuge, z. B. CCS-Stecker oder Typ2-Stecker, haben eine die Steckkontakte umfangsseitig umgebende Schutzwand, die sich z. B. ringförmig vollständig um die Steckkontakte herum erstrecken kann. Der Ladeanschluss des Elektrofahrzeugs ist dabei als Gegenstück zu dieser Formgebung des Anschlussverbinders gestaltet, sodass zur Aufnahme der ringförmigen Schutzwand eine entsprechende nutförmige Aussparung am Ladeanschluss vorhanden ist, die wenigstens einige Steckkontakte oder alle Steckkontakte des Ladeanschlusses umfangsseitig umgibt. Die nutförmige Aussparung kann sich z. B. ringförmig um die Steckkontakte des Ladeanschlusses herum erstrecken. Eine solche bei handelsüblichen Ladeanschlüssen ohnehin vorhandene Aussparung kann gemäß einer vorteilhaften Ausgestaltung der Erfindung als Anbringungsort für das Identifikationsmodul genutzt werden.

Gemäß einer vorteilhaften Ausgestaltung der Erfindung ist vorgesehen, dass das Identifikationsmodul eine ringförmige Gestalt mit einer inneren Öffnung aufweist, die an eine nutförmige Aussparung des Ladeanschlusses angepasst ist. Auf diese Weise kann das Identifikationsmodul besonders günstig in der nutförmigen Aussparung angebracht werden. Insbesondere kann der in der nutförmigen Aussparung vorhandene Bauraum durch das Identifikationsmodul weitgehend flächig ausgenutzt werden, insbesondere indem das Identifikationsmodul insbesondere besonders flach gestaltet wird. Das Identifikationsmodul kann dabei eine ringförmige Gestalt haben, die als vollständig geschlossener Ring oder als mit wenigstens einer Unterbrechung gestalteter Ring ausgebildet sein kann.

Gemäß einer vorteilhaften Ausgestaltung der Erfindung ist vorgesehen, dass die Leiterschleife oder die Leiterschleifen der Antenne sich um die innere Öffnung des Identifikationsmoduls herum erstrecken. Auf diese Weise wird eine gute Funkübertragung vom Identifikationsmodul zur Abfrageeinheit des Anschlussverbinders gewährleistet.

Gemäß einer vorteilhaften Ausgestaltung der Erfindung ist vorgesehen, dass das Identifikationsmodul eine Bauhöhe hat, die wesentlich geringer ist als der Durchmesser des Identifikationsmoduls, insbesondere eine Bauhöhe von weniger als 10% des Durchmessers. Auf diese Weise kann das Identifikationsmodul ohne weiteres in vorhandenen Ladeanschlüssen nachgerüstet werden, ohne dass dabei das Zusammenstecken mit dem Anschlussverbinder der Ladeeinrichtung behindert wird.

Gemäß einer vorteilhaften Ausgestaltung der Erfindung ist vorgesehen, dass das Identifikationsmodul auf wenigstens einer zur Befestigung an dem Ladeanschluss angeordneten Oberfläche des Identifikationsmoduls eine Klebeschicht zum Verkleben des Identifikationsmoduls auf dem Grund der Aussparung des Ladeanschlusses hat. Dies erlaubt eine einfache, schnelle und zuverlässige Befestigung des Identifikationsmoduls am Elektrofahrzeug. Im Auslieferungszustand kann das Identifikationsmodul beispielsweise eine Schutzfolie haben, durch die die Klebeschicht abgedeckt ist. Vor dem Anbringen des Identifikationsmoduls am Elektrofahrzeug kann die Schutzfolie abgezogen werden und das Identifikationsmodul dann am Ladeanschluss verklebt werden. Das Identifikationsmodul kann dann mittels der Klebeschicht auf dem Grund der Aussparung befestigt werden.

Gemäß einer vorteilhaften Ausgestaltung der Erfindung ist vorgesehen, dass das Identifikationsmodul eine Sollbruchstelle hat, durch die ein auf dem Grund der Aussparung des Ladeanschlusses befestigtes Identifikationsmodul nicht wieder zerstörungsfrei davon entfernbar ist. Auch dies ist förderlich für eine manipulationssichere Identifikation des Elektrofahrzeugs. Durch die Sollbruchstelle wird sichergestellt, dass im Falle eines Entfernens des Identifikationsmoduls vom Elektrofahrzeug dieses derart beschädigt wird, dass es nicht mehr funktionsfähig ist, zumindest insoweit, dass der Identifikationscode nicht mehr übertragen wird. Auf diese Weise wird insbesondere, wenn das Identifikationsmodul mittels der Klebeschicht auf dem Grund der Aussparung befestigt wird, einer Manipulation entgegengewirkt.

Die eingangs genannte Aufgabe wird außerdem gelöst durch ein Elektrofahrzeug mit einem Ladeanschluss zum Aufladen der Antriebsbatterie des Elektrofahrzeugs, wobei der Ladeanschluss eine nutförmige Aussparung hat, die wenigstens einige Stecckontakte des Ladeanschlusses umfangsseitig umgibt, wobei in der Aussparung ein Identifikationsmodul zur drahtlosen elektronischen Identifikation eines Elektrofahrzeugs eingesetzt ist, durch das im Falle einer durch Funksignale drahtlos durchgeführten Abfrage eines Identifikationscodes dieser übertragen wird, insbesondere ein Identifikationsmodul der zuvor erläuterten Art eingesetzt ist. Auch hierdurch werden die zuvor erläuterten Vorteile realisiert. Vorteilhafter Weise kann das Identifikationsmodul dabei auf dem Grund der Aussparung des Ladeanschlusses befestigt sein. Auf diese Weise wird das Einstecken des Anschlussverbinders in den Ladeanschluss nicht behindert.

Als Elektrofahrzeug im Sinne der vorliegenden Erfindung werden insbesondere Personenkraftwagen, Lastkraftwagen und Motorräder verstanden, die über einen Elektroantrieb für den Antrieb des Elektrofahrzeuges und eine Antriebsbatterie zur elektrischen Versorgung des Elektroantriebs verfügen. Elektrofahrzeuge in diesem Sinne sind insbesondere reine Elektrofahrzeuge ohne Verbrennerantrieb sowie Elektrofahrzeuge mit Hybridantrieb, soweit ein Ladeanschluss zum externen Aufladen der Antriebsbatterie von einer vom Elektrofahrzeug getrennten Energiequelle vorhanden ist. Das Elektrofahrzeug wird nachfolgend auch kurz als "Fahrzeug" bezeichnet.

Die eingangs genannte Aufgabe wird außerdem gelöst durch eine Ladeeinrichtung zum Aufladen der Antriebsbatterie eines Elektrofahrzeugs aus einer zum Aufladen der Antriebsbatterie geeigneten Energiequelle, wobei die Ladeeinrichtung wenigstens einen Anschlussverbinder zum Verbinden mit dem Ladeanschluss des Elektrofahrzeugs hat, wobei in den Anschlussverbinder eine elektronische Abfrageeinheit baulich integriert ist, die zum Abfragen des Identifikationscodes eines Identifikationsmoduls der zuvor erläuterten Art und/oder zum Abfragen des Identifikationscodes eines Identifikationsmoduls eines Elektrofahrzeuges der zuvor erläuterten Art ausgebildet ist. Auch hierdurch können die zuvor erläuterten Vorteile realisiert werden. Die Ladeeinrichtung kann z. B. ein vom Anwender mitnehmbares (mobiles) Ladekabel sein, z. B. ein intelligentes Ladekabel mit eigener Steuerelektronik, oder eine stationäre Ladeeinrichtung im Sinne einer Ladesäule oder Wallbox. Durch die Integration der elektronischen Abfrageeinheit in den Anschlussverbinder kann eine zuverlässige Funk-Datenübertragung mit dem Identifikationsmodul sichergestellt werden, zumindest wenn der Anschlussverbinder mit dem Ladeanschluss zusammengesteckt ist.

Gemäß einer vorteilhaften Ausgestaltung der Erfindung ist vorgesehen, dass zumindest ein Teil der Abfrageeinheit in die Gehäusekontur des Anschlussverbinders baulich integriert ist. Beispielsweise kann die Antenne der Abfrageeinheit im Wesentlichen die gleiche Form und Dimension haben wie die Antenne des Identifikationsmoduls. Hierdurch wird eine zuverlässige Funkübertragung sichergestellt. Der in die Gehäusekontur des Anschlussverbinders integrierte Teil der Abfrageeinheit kann z. B., wie das Identifikationsmodul, eine ringförmige Gestalt mit einer inneren Öffnung aufweisen. Dabei können sich elektrische Leitungen oder Steckkontakte des Anschlussverbinders durch die innere Öffnung hindurch erstrecken.

Gemäß einer vorteilhaften Ausgestaltung der Erfindung ist vorgesehen, dass die Ladeeinrichtung dazu eingerichtet ist, den abgefragten Identifikationscode zu Abrechnungszwecken eines Ladevorgangs mit Kenndaten des Ladevorgangs zu verknüpfen. Dies hat den Vorteil, dass bereits durch die Ladeeinrichtung sichergestellt werden kann, dass eine korrekte, manipulationssichere Abrechnung von Ladevorgängen durchgeführt werden kann, d. h. mit einer korrekten Zuordnung der Ladekosten zum jeweiligen Elektrofahrzeug.

Gemäß einer vorteilhaften Ausgestaltung der Erfindung ist vorgesehen, dass die Ladeeinrichtung dazu eingerichtet ist, die bei einem Ladevorgang aus der Energiequelle in das Elektrofahrzeug eingeladene Energiemenge oder eine die Energiemenge charakterisierende Kenngröße zu erfassen und mit einer Zuordnung zum abgefragten Identifikationscode in einer Speichereinrichtung zu speichern. Auch hierdurch wird eine manipulationssichere Abrechnung von Ladegängen gefördert. Die Ladeeinrichtung kann die zu speichernden Daten beispielsweise in einer Speichereinrichtung der Ladeeinrichtung und/oder in einer davon separaten Speichereinrichtung speichern, z. B. in einer Cloud.

Die Speichereinrichtung kann eine Speichereinrichtung der Ladeeinrichtung sein, d. h. ein in die Ladeeinrichtung integrierter Speicher, und/oder eine entfernte Speichereinrichtung, wie zum Beispiel ein über ein Datennetzwerk mit der Ladeeinrichtung verbundener oder verbindbarer Server. Beispielsweise kann die Speicherung der Daten über das Internet durchgeführt werden, zum Beispiel in einer Cloud. In einer vorteilhaften Ausgestaltung der Erfindung können zugleich beide Arten der Speicherung durchgeführt werden, d. h. die Speicherung der Daten in einer Speichereinrichtung der Ladeeinrichtung und zusätzlich in einer entfernten Speichereinrichtung.

Gemäß einer vorteilhaften Weiterbildung der Erfindung ist vorgesehen, dass
a) die Ladeeinrichtung dazu eingerichtet ist, eine die angeschlossene Energiequelle eindeutig kennzeichnende Energiequellenkennung zu erfassen,
b) wobei die Ladeeinrichtung dazu eingerichtet ist, die erfasste eingeladene Energiemenge oder die die Energiemenge charakterisierende Kenngröße mit einer Zuordnung zur Energiequellenkennung der Energiequelle in der Speichereinrichtung zu speichern.

Dies hat den Vorteil, dass auch die für das Laden genutzte Energiequelle, nachfolgend auch Entnahmestelle genannt, erfasst werden kann, um diese ebenfalls in den zu speichernden Daten getrennt zu erfassen.

Gemäß einer vorteilhaften Weiterbildung der Erfindung ist vorgesehen, dass die Ladeeinrichtung dazu eingerichtet ist, die erfasste eingeladene Energiemenge oder die die Energiemenge charakterisierende Kenngröße mit einer Zuordnung zu einer die Ladeeinrichtung eindeutig kennzeichnenden Ladeeinrichtungskennung in der Speichereinrichtung zu speichern, wobei es vorteilhaft ist, die Speicherung in einer externen, von der Ladeeinrichtung entfernten Speichereinrichtung durchzuführen, z. B. in der Cloud, einem mit dem Internet verbundenen Server oder einem mobilen Endgerät. Dies hat den Vorteil, dass die Energieverbrauchsdaten zusätzlich nach den verwendeten Ladeeinrichtungen aufgeschlüsselt werden können.

Gemäß einer vorteilhaften Weiterbildung der Erfindung ist vorgesehen, dass die Ladeeinrichtung wenigstens eine Kommunikationsschnittstelle hat, wobei die Ladeeinrichtung eine Kommunikationsfunktion hat, die dazu eingerichtet ist, über die Kommunikationsschnittstelle mit einem mobilen Endgerät, einem Server und/oder der zum Aufladen der Antriebsbatterie geeigneten oder angeschlossenen Energiequelle zu kommunizieren. Dies hat den Vorteil, dass die Ladeeinrichtung dem Benutzer erweiterte Kommunikationsfunktionen bereitstellt, zum Beispiel für eine Kommunikation mit einem Smartphone oder einem sonstigen mobilen Endgerät, oder für eine Kommunikation mit dem Internet, zum Beispiel für die Speicherung von Energieverbrauchsdaten in der Cloud.

Die Kommunikationsschnittstelle kann eine drahtgebundene oder eine drahtlose Kommunikationsschnittstelle sein. Die drahtgebundene Kommunikationsschnittstelle kann zum Beispiel eine Schnittstelle für die Powerline-Kommunikation sein. Als drahtlose Kommunikationsschnittstelle können eines oder mehrere der folgenden Komponenten in der Ladeeinrichtung vorhanden sein: Mobilfunk-Modul eines zellularen Mobilfunknetzes, WLAN-Modul, Bluetooth-Modul. Die Ladeeinrichtung kann auch eine oder mehrere drahtgebundene Kommunikationsschnittstellen und eine oder mehrere drahtlose Kommunikationsschnittstellen haben.

Die eingangs genannte Aufgabe wird außerdem gelöst durch ein Set aus einer Ladeeinrichtung der zuvor erläuterten Art und einem Identifikationsmodul der zuvor erläuterten Art. Das Set kann auch mehrere Ladeeinrichtungen und/oder mehrere Identifikationsmodule haben. Auch hierdurch werden die zuvor erläuterten Vorteile realisiert.

Die eingangs genannte Aufgabe wird außerdem gelöst durch ein Verfahren zur Anbringung eines Identifikationsmoduls der zuvor erläuterten Art an einem Elektrofahrzeug, wobei das Identifikationsmodul in die nutförmige Aussparung des Ladeanschlusses eingeführt wird. Auch hierdurch werden die zuvor erläuterten Vorteile realisiert. Vorteilhafter Weise kann das Identifikationsmodul dabei auf dem Grund der Aussparung des Ladeanschlusses befestigt werden, z. B. durch Verkleben. Hierfür kann eine am Identifikationsmodul vorhandene Klebeschicht genutzt werden.

Das Einführen des Identifikationsmoduls und/oder das Befestigen des Identifikationsmoduls auf dem Grund der Aussparung kann durch Hinzunahme eines Hilfswerkzeugs durchgeführt werden. Das Hilfswerkzeug ist zumindest mit einem Teil seiner Gestalt oder vollständig als Gegenstück zu der nutförmigen Aussparung des Ladeanschlusses geformt, d. h. im Wesentlichen wie die erwähnte ringförmige Schutzwand des Anschlussverbinders. Insbesondere kann das Hilfswerkzeug dementsprechend eine ringförmige Gestalt mit einer inneren Öffnung haben. Das Identifikationsmodul kann dann mittels des Hilfswerkzeugs in die nutförmige Aussparung eingeführt werden und gegen den Grund der Aussparung gedrückt werden, bis die Klebeschicht ein wirksames Verkleben des Identifikationsmoduls am Grund der Aussparung bewirkt.

Die Erfindung wird nachfolgend anhand von Ausführungsbeispielen unter Verwendung von Zeichnungen näher erläutert.

### Es zeigen

- Figur 1: einen Ladeanschluss eines Elektrofahrzeugs, ein Identifikationsmodul und einen Anschlussverbinder in perspektivischer Ansicht,
- Figur 2: den Vorgang des Befestigens eines Identifikationsmoduls am Ladeanschluss,
- Figur 3: ein am Ladeanschluss angebrachtes Identifikationsmodul mit Sollbruchstelle,
- Figur 4: das Entfernen des Identifikationsmoduls vom Ladeanschluss.

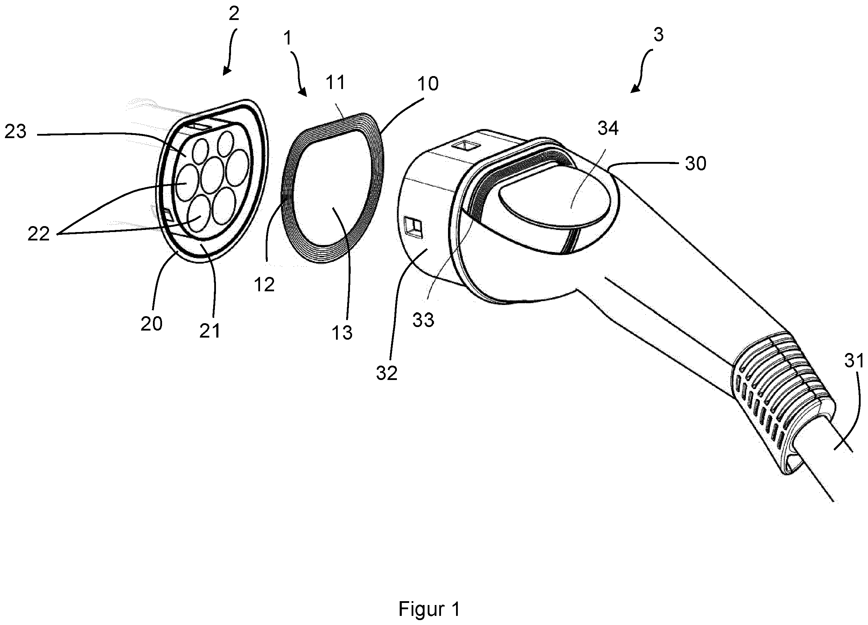

Die Figur 1 zeigt ein Identifikationsmodul 1 mit einem Modulkörper 10, der eine ringförmige Gestalt mit einer inneren Öffnung 13 aufweist. In dem dargestellten Ausführungsbeispiel ist der Modulkörper 10 als geschlossener Ring dargestellt. Das Identifikationsmodul 1 weist mehrere im oder am Modulkörper 10 angeordnete Leiterschleifen auf, die eine Antenne 11 bilden, sowie ein mit der Antenne 11 verbundenes elektronisches Bauelement 12, z. B. einen RFID-Tag oder einen NFC-Tag, in dem ein eindeutiger Identifikationscode gespeichert ist. Dabei ist die Gestalt des Modulkörpers 10 an die nutförmige Aussparung 21 eines links dargestellten Ladeanschlusses 2 eines Elektrofahrzeugs angepasst. Der Ladeanschluss 2 weist einen Gehäusekörper 20 auf, in dem ein Kontaktträger 23 angeordnet ist, an dem mehrere elektrische Steckkontakte 22 des Ladeanschlusses 2 angeordnet und gehalten sind. Dieser Kontaktträger 23 ist von der nutförmigen Aussparung 21 ringförmig umgeben.

Rechts vom Identifikationsmodul 1 ist ein Anschlussverbinder 3 zum Anstecken an den Ladeanschluss 2 dargestellt. Der Anschlussverbinder 3 weist ein Gehäuse 30 auf, aus sich dem ein Anschlusskabel 31 herauserstreckt. Der Anschlussverbinder 3 hat ebenfalls elektrische Steckkontakte, die als Gegenstücke zu den Steckkontakten 22 des Ladeanschlusses 2 ausgebildet sind und in der Figur 1 nicht dargestellt sind.

Die Steckkontakte des Anschlussverbinders 3 befinden sich in einem von einer ringförmigen Schutzwand 32 umgebenen Bereich. Die ringförmige Schutzwand 32 ist hinsichtlich der Formgebung als Gegenstück zu der nutförmigen Aussparung 21 gestaltet. In den Anschlussverbinder 3 ist eine elektronische Abfrageeinheit 33, 34 zum Abfragen des Identifikationscodes des Identifikationsmoduls 1 baulich integriert. Die Abfrageeinheit 33, 34 kann z. B. eine Abfrageschaltung 34, z. B. eine Platine mit einer RFID- oder NFC-Abfrageschaltung, sowie eine mit der Abfrageschaltung 34 verbundene Antenne 33 aufweisen.

Die Antenne 33 kann sich in diesem Ausführungsbeispiel im Gehäuse 30 noch vor der eigentlichen Steckerkontur bzw. der Schutzwand 32 befinden. Somit hat die Antenne 33 zur Antenne 11 des Identifikationsmoduls 1 einen Abstand, der etwa der Tiefe der Steckerkontur entspricht. Zur Verringerung dieses Abstands und damit zur besseren magnetischen Kopplung der beiden Antennen kann die Antenne 33 auch in die Schutzwand 32 eingearbeitet sein. Somit lässt sich ein Abstand der beiden Antennen von nur wenigen Millimetern erreichen.

Die Antenne 33 ist elektrisch mit der Abfrageschaltung 34, d. h. einer Elektronik, verbunden, die den Controller für die Kommunikation mit dem Identifikationsmodul 1 enthält. Dieser steht wiederum über Steuerleitungen in Kommunikationsverbindung mit der Steuerelektronik des Ladekabels oder der Wallbox, d. h. der Ladeeinrichtung. Die gesammelten Daten zu dem Ladevorgang, die z. B. den Ladeort, die Ladeleistung, die übertragene Energiemenge, die Ladezeit, usw. enthalten, werden mit dem durch den Identifikationscode vom Identifikationsmodul identifizierten Fahrzeug verknüpft und entweder in der Ladeeinrichtung gespeichert und/oder über eine drahtgebundene oder drahtlose Kommunikation auf einem anderen Speicherort, z. B. in der Cloud.

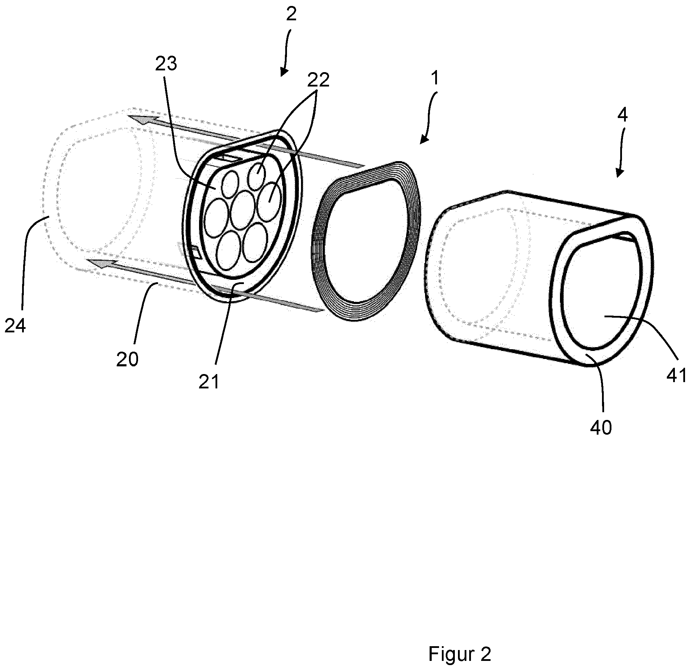

Die Figur 2 zeigt die Anbringung des Identifikationsmoduls 1 am Grund 24 der Aussparung 21. Hierfür wird ein Hilfswerkzeug 4 genutzt, das einen ringförmigen Basiskörper 40 mit einer inneren Öffnung 41 hat. Das Hilfswerkzeug 4 ist hinsichtlich seiner Formgebung an die Form der Aussparung 21 angepasst, sodass damit das Identifikationsmodul 1 in die ringförmige nutartige Aussparung 21 eingeführt und bis zum Grund 24 vorbewegt werden kann. Durch entsprechendes Andrücken des Identifikationsmoduls 1 mittels des Hilfswerkzeugs 4 an dem Grund 24 kann dieses dann dort befestigt werden, beispielsweise durch Verkleben mittels einer Klebeschicht des Identifikationsmoduls 1.

Ist das Identifikationsmodul 1 an dem Grund 24 der Aussparung 21 angebracht, so kann der Anschlussverbinder 3 wie gewohnt ohne Behinderungen durch das Identifikationsmodul 1 in den Ladeanschluss 2 eingesteckt werden. Im eingesteckten Zustand kann der Identifikationscode vom Identifikationsmodul 1 mittels der Abfrageeinheit 33, 34 im Anschlussverbinder 3 ausgelesen werden und in der Ladeeinrichtung ausgewertet werden.

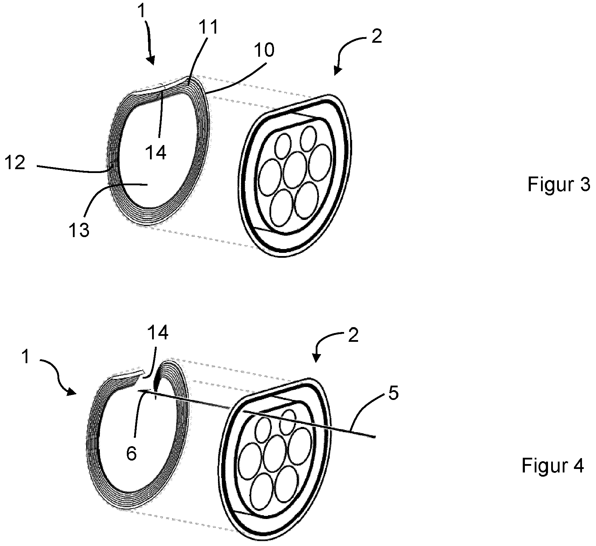

Da das Ziel der Fahrzeugidentifikation die manipulationssichere Identifikation des Fahrzeugs ist, muss sichergestellt werden, dass das Identifikationsmodul 1 nicht einfach entfernt und an einem anderen Fahrzeug benutzt werden kann. Zu diesem Zweck kann in dem Identifikationsmodul 1 eine Sollbruchstelle 14 eingebaut sein, z. B. eine Art Schlitz, wie die Figur 3 zeigt.

Die Figur 4 zeigt ein Werkzeug 5, mit dem das Identifikationsmodul 1 wieder entfernt werden kann. Das Werkzeug 5 kann z. B. ein Metallstab mit einem Widerhaken 6 am Ende sein. Zum Entfernen des Identifikationsmoduls 1 wird das Werkzeug 5 mit dem Widerhaken 6 voran in die Aussparung 21 des Ladeanschlusses 2 und der Widerhaken 6 dann in ein Loch neben der Sollbruchstelle 14 eingeführt. Danach wird das Identifikationsmodul 1, das nun am Widerhaken 6 hängt, aus der Aussparung 21 herausgezogen, wobei eine Zugkraft auf der einen Seite des klebenden Identifikationsmoduls 1 ausgeübt wird. Durch die Zugkraft löst sich die Verklebung und das Identifikationsmodul 1 lässt sich vollständig herausziehen, allerdings nur durch Bruch der Sollbruchstelle 14, d. h. anschließend ist das Identifikationsmodul 1 zerstört und lässt sich nicht mehr verwenden.

## Patentansprüche

1. Identifikationsmodul (1) zur drahtlosen elektronischen Identifikation eines Elektrofahrzeugs, aufweisend eine Antenne (11) mit einer oder mehreren spulenartig angeordneten Leiterschleifen und ein mit der Antenne (11) verbundenes elektronisches Bauelement (12), in dem ein eindeutiger Identifikationscode gespeichert ist, wobei das Identifikationsmodul (1) dazu eingerichtet ist, im Falle einer durch Funksignale drahtlos durchgeführten Abfrage des Identifikationscodes diesen über die Antenne (11) zu übertragen, wobei das Identifikationsmodul (1) zur Anbringung an einem Ladeanschluss (2) zum Aufladen der Antriebsbatterie des Elektrofahrzeugs eingerichtet ist.

2. Identifikationsmodul nach Anspruch 1, **dadurch gekennzeichnet, dass** das Identifikationsmodul (1) eine äußere Formgebung hat, die wenigstens teilweise an die Form einer nutförmigen Aussparung (21) des Ladeanschlusses (2), die wenigstens einige Steckkontakte (22) des Ladeanschlusses (2) umfangsseitig umgibt, angepasst ist, so dass das Identifikationsmodul (1) in diese Aussparung (21) einsetzbar ist.

3. Identifikationsmodul nach einem der vorhergehenden Ansprüche, **dadurch gekennzeichnet, dass** das Identifikationsmodul (1) eine ringförmige Gestalt mit einer inneren Öffnung (13) aufweist, die an eine nutförmige Aussparung (21) des Ladeanschlusses (2) angepasst ist.

4. Identifikationsmodul nach Anspruch 3, **dadurch gekennzeichnet, dass** die Leiterschleife oder die Leiterschleifen der Antenne (11) sich um die innere Öffnung (13) des Identifikationsmoduls (1) herum erstrecken.

5. Identifikationsmodul nach einem der vorhergehenden Ansprüche, **dadurch gekennzeichnet, dass** das Identifikationsmodul (1) eine Bauhöhe hat, die wesentlich geringer ist als der Durchmesser des Identifikationsmoduls (1), insbesondere eine Bauhöhe von weniger als 10% des Durchmessers.

6. Identifikationsmodul nach einem der vorhergehenden Ansprüche, **dadurch gekennzeichnet, dass** das Identifikationsmodul (1) auf wenigstens einer zur Befestigung an dem Ladeanschluss (2) angeordneten Oberfläche des Identifikationsmoduls (1) eine Klebeschicht zum Verkleben des Identifikationsmoduls (1) auf dem Grund (24) der Aussparung (21) des Ladeanschlusses (2) hat.

7. Identifikationsmodul nach einem der vorhergehenden Ansprüche, **dadurch gekennzeichnet, dass** das Identifikationsmodul (1) eine Sollbruchstelle (14) hat, durch die ein auf dem Grund (24) der Aussparung (21) des Ladeanschlusses (2) befestigtes Identifikationsmodul (1) nicht wieder zerstörungsfrei davon entfernbar ist.

8. Elektrofahrzeug mit einem Ladeanschluss (2) zum Aufladen der Antriebsbatterie des Elektrofahrzeugs, wobei der Ladeanschluss (2) eine nutförmige Aussparung (21) hat, die wenigstens einige Steckkontakte (22) des Ladeanschlusses (2) umfangsseitig umgibt, **dadurch gekennzeichnet, dass** in der Aussparung (21) ein Identifikationsmodul (1) zur drahtlosen elektronischen Identifikation eines Elektrofahrzeugs eingesetzt ist, durch das im Falle einer durch Funksignale drahtlos durchgeführten Abfrage eines Identifikationscodes dieser übertragen wird, insbesondere ein Identifikationsmodul (1) nach einem der Ansprüche 1 bis 7.

9. Elektrofahrzeug nach Anspruch 7 oder 8, **dadurch gekennzeichnet, dass** das Identifikationsmodul (1) auf dem Grund (24) der Aussparung (21) des Ladeanschlusses (2) befestigt ist.

10. Ladeeinrichtung (3) zum Aufladen der Antriebsbatterie eines Elektrofahrzeugs aus einer zum Aufladen der Antriebsbatterie geeigneten Energiequelle, wobei die Ladeeinrichtung (3) wenigstens einen Anschlussverbinder (30) zum Verbinden mit dem Ladeanschluss (2) des Elektrofahrzeugs hat, **dadurch gekennzeichnet, dass** in den Anschlussverbinder (30) eine elektronische Abfrageeinheit (33, 34) baulich integriert ist, die zum Abfragen des Identifikationscodes eines Identifikationsmoduls (1) nach einem der Ansprüche 1 bis 7 und/oder zum Abfragen des Identifikationscodes eines Identifikationsmoduls (1) eines Elektrofahrzeuges nach einem der Ansprüche 8 bis 9 ausgebildet ist.

11. Ladeeinrichtung nach Anspruch 10, **dadurch gekennzeichnet, dass** zumindest ein Teil der Abfrageeinheit (33, 34) in die Gehäusekontur des Anschlussverbinders (30) baulich integriert ist.

12. Ladeeinrichtung nach einem der Ansprüche 10 bis 11, **dadurch gekennzeichnet, dass** die Ladeeinrichtung (3) dazu eingerichtet ist, den abgefragten Identifikationscode zu Abrechnungszwecken eines Ladevorgangs mit Kenndaten des Ladevorgangs zu verknüpfen.

13. Ladeeinrichtung nach Anspruch 12, **dadurch gekennzeichnet, dass** die Ladeeinrichtung dazu eingerichtet ist, die bei einem Ladevorgang aus der Energiequelle in das Elektrofahrzeug eingeladene Energiemenge oder eine die Energiemenge charakterisierende Kenngröße zu erfassen und mit einer Zuordnung zum abgefragten Identifikationscode in einer Speichereinrichtung zu speichern.

14. Set aus einer Ladeeinrichtung (3) nach einem der Ansprüche 10 bis 13 und einem Identifikationsmodul (1) nach einem der Ansprüche 1 bis 7.

15. Verfahren zur Anbringung eines Identifikationsmoduls (1) zur drahtlosen elektronischen Identifikation eines Elektrofahrzeugs, durch das im Falle einer durch Funksignale drahtlos durchgeführten Abfrage eines Identifikationscodes dieser übertragen wird, insbesondere eines Identifikationsmoduls (1) nach einem der Ansprüche 1 bis 7, an einem Elektrofahrzeug, **dadurch gekennzeichnet, dass** das Identifikationsmodul (1) in die nutförmige Aussparung (21) des Ladeanschlusses (2) eingeführt wird.

16. Verfahren nach Anspruch 15, **dadurch gekennzeichnet, dass** das Identifikationsmodul (1) auf dem Grund (24) der Aussparung (21) des Ladeanschlusses (2) befestigt wird, z.B. durch Verkleben.
